(19) **Europäisches Patentamt**
**European Patent Office**
**Office européen des brevets**

(11) **EP 1 693 836 B1**

(12) **EUROPEAN PATENT SPECIFICATION**

(45) Date of publication and mention
of the grant of the patent:
**08.09.2010 Bulletin 2010/36**

(51) Int Cl.:
**G11B 7/0045** (2006.01)  **G11B 7/125** (2006.01)

(21) Application number: **04770960.5**

(86) International application number:
**PCT/JP2004/010649**

(22) Date of filing: **27.07.2004**

(87) International publication number:
**WO 2005/050631 (02.06.2005 Gazette 2005/22)**

(54) **RECORDING METHOD, RECORDER AND RECORDING MEDIUM**

AUFZEICHNUNGSVERFAHREN, RECORDER UND AUFZEICHNUNGSMEDIUM

PROCEDE, DISPOSITIF ET SUPPORT D'ENREGISTREMENT

(84) Designated Contracting States:
**DE ES FR GB IT NL**

(30) Priority: **21.11.2003 JP 2003392206**
**27.05.2004 JP 2004157360**

(43) Date of publication of application:
**23.08.2006 Bulletin 2006/34**

(73) Proprietor: **Ricoh Company, Ltd.**
**Tokyo 143-8555 (JP)**

(72) Inventors:
• **NINOMIYA, Masaki**
**Yokohama-shi, Kanagawa 224-0041 (JP)**

• **MATSUBA, Takanobu,**
**Ricoh Company, Ltd.,**
**IP Development Office**
**Yokohama-shi, Kanagawa 222-0033 (JP)**

(74) Representative: **Mounteney, Simon James**
**Marks & Clerk LLP**
**90 Long Acre**
**London**
**WC2E 9RA (GB)**

(56) References cited:
**EP-A- 1 244 096       WO-A-00/79525**
**JP-A- 2001 052 337    US-A1- 2003 137 915**

EP 1 693 836 B1

## Description

### Technical Field

The present invention generally relates to a recording method, a recording apparatus, and a storage medium in which optimum recording power is determined by performing test writing on a test zone of a recording medium, and information is recorded on the recording medium by using the determined optimum recording power.

### Background Art

For example, Japanese Patent Application Publication No. 2003-22532 (hereafter called patent document 1) discloses a technology with which, in recording information on a second or subsequent recording layer of a multilayer optical disc having a multi-recording-layer structure, laser power of a recording laser beam can be adequately controlled and information can be recorded with excellent recording quality even when the amount of passing light varies depending on recording conditions of a recording layer situated closer to a laser source than the target recording layer. The laser beam from the laser source is focused on the surface of a recording film of the optical disc by an optical pickup, and reflected light is detected by a light detecting unit and input into a control unit to perform power control of a laser driver. Before starting recording of user data, the control unit determines a recording power by performing tests of recording power on a recording power testing zone outside of a user data recording zone. The control unit records user data on the user data recording zone based on the determined recording power.

US 2003/0137915 discloses an information recording medium which comprises a plurality of recording layers and a first disc information area for storing parameters relating to access to the plurality of recording layers and formats relating to the plurality of recording layers. The first disc information area is provided in a first recording layer which is one of the plurality of recording layers.

### Disclosure of Invention

### Problems to be Solved by the Invention

When information is recorded on a conventional single layer recording medium having only one recording layer, the optimum laser power for recording differs depending on conditions such as differences among recording apparatuses, recording speed, and characteristics of recording media. For this reason, test writing is performed on a certain test.zone for the optimal power control (OPC) for determining the optimal laser power for recording before writing or rewriting information. The OPC should also be performed when writing or rewriting information on a recording medium with a multi-recording-layer structure (multilayer recording medium), which has multiple recording layers within one recording surface.

When recording information on such a multilayer recording medium, there are problems as described below.

1. For example, when information is recorded on the second recording layer of a two-layer recording medium having two recording layers within one recording surface, the information must be recorded on the second recording layer through the first recording layer. Therefore, the amount of light of a laser beam reaching the second layer differs depending on whether information is recorded (the layer having high reflectivity and low transmittance) or not recorded (the layer having low reflectivity and high transmittance) on the first layer. As a result, optimum recording power varies depending on the condition of the first layer. This fluctuation in optimum recording power may result in lower recording quality of the second layer, represented by jitter, high error rates, or the like.

2. When information is to be recorded on a recordable or rewritable multilayer recording medium in which test zones in the first and second layers are positioned so as not to overlap, the optimum recording power for recording information on the first layer can be obtained by performing the OPC in its test zone. After information is recorded on the first layer, the first layer has low reflectivity and high transmittance. Information should be recorded on the second layer through this first layer. Since the test zone in the second layer is positioned so as not to overlap the test zone in the first layer, no information is recorded on the portion of the first layer through which test writing for the second layer is performed. Therefore, the state of the portion is different from that of another portion of the first layer through which information is to be actually recorded.

3. Also, even when the test zones in the first and second layers are positioned in the same recording surface area and the OPC is performed in the test zone in the second layer, if the first layer test zone which is in the same recording surface area as that of the second layer test zone is in an erased state, the state of the first layer test zone is different from that of the other zones of the first layer through which information is actually recorded.

An object of the present invention is to determine the optimum recording power for recording information on the second or subsequent layer of a multilayer recording medium by performing test writing.

The invention is defined by the appended claims.

**Means for Solving the Problems**

According to a first aspect of the invention there is provided a recording method as set out in Claim 2.

According to a second aspect of the invention there is provided a recording method as set out in Claim 2.

According to a third aspect of the invention there is provided a recording apparatus as set out in Claim 3.

According to a fourth aspect of the invention there is provided a recording apparatus as set out in Claim 4.

According to a fifth aspect of the invention there is provided a computer-readable storage medium as set out in Claim 5.

According to a sixth aspect of the invention there is provided a computer-readable storage medium as set out in Claim 6.

**Advantageous Effect of the Invention**

With the present invention, the optimum recording power for recording information on the second or subsequent layer of a multilayer recording medium can be obtained.

**Breaf Description of the Drawings**

FIG. 1 is a drawing illustrating a configuration of a multilayer recording medium;

FIG. 2 is a block diagram illustrating electric connections in a recording apparatus;

FIG. 3 is a drawing used to describe a process of detecting upper and lower envelope levels with AC coupling;

FIG. 4 is a drawing used to describe the OPC;

FIG. 5 is a flowchart illustrating a process performed by the recording apparatus;

FIG. 6 is a flowchart illustrating another exemplary process performed by the recording apparatus;

FIG. 7 is a flowchart illustrating another exemplary process performed by the recording apparatus;

FIG. 8 is a drawing illustrating another configuration of a multilayer recording medium;

FIG. 9 is a flowchart illustrating another exemplary process performed by the recording apparatus;

FIG. 10 is a flowchart illustrating another exemplary process performed by the recording apparatus;

FIG. 11 is a drawing used to describe the process shown in FIG. 10;

FIG. 12 is a flowchart illustrating another exemplary process performed by the recording apparatus;

FIG. 13 is a drawing used to describe the process shown in FIG. 12;

FIG. 14 is a flowchart illustrating another exemplary process performed by the recording apparatus;

FIG. 15 is a drawing illustrating inner (a) and outer (b) drive areas in a multilayer recording medium; and

FIG. 16 is a block diagram illustrating a recording medium on which a program is recorded.

**Explanation of References**

| | |
|---|---|
| 101 | Recording apparatus |
| 107-1 | CPU |
| 107-2 | ROM |
| 107-3 | RAM |
| 108 | Memory unit |
| 109 | External I/F |
| 120 | Host computer |
| 130 | Storage medium |
| 201 | Multilayer recording medium |
| 202, 203 | Recording layer |
| 202a, 202b | Data zone |
| 202b, 202c, 203b, 203c | Test zone |
| 202b, 202e | Portion |

301, 302                              Count zone

## Best Mode for Carrying Out the Invention

The best mode for carrying out the invention is described based on the following embodiments with reference to the accompanying drawings.

### 1. First Embodiment

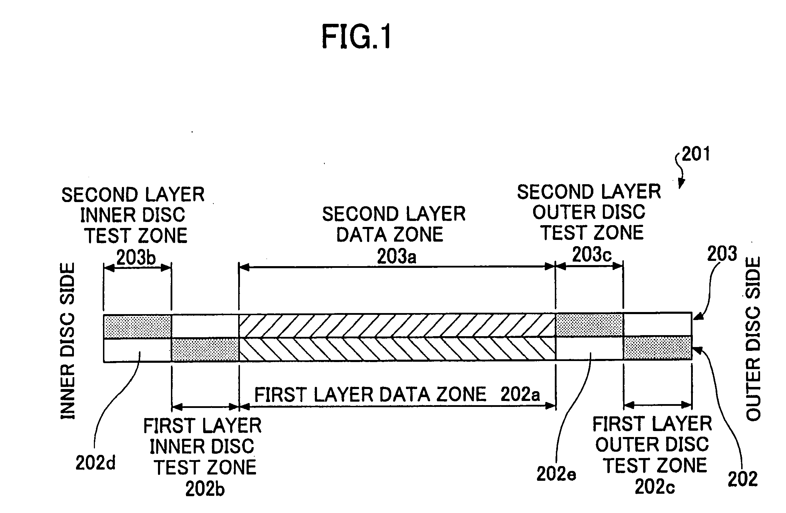

A preferred embodiment of the present invention is described below. FIG. 1 is a drawing illustrating a configuration of a multilayer recording medium 201 used in this embodiment. The multilayer recording medium 201 is a multilayer recording medium having multiple recording layers within one recording surface (this exemplary recording medium has two layers: a first layer 202 and a second layer 203). Examples of such a multilayer recording medium are an optical disc and a magnetic optical disc which enable optical recording and playback of information.

The first layer 202 and the second layer 203 of the multilayer recording medium 201 includes data zones 202a and 203a; and test zones 202b, 202c, 203b, and 203c in the inner and outer disc areas, which are used to perform the OPC for determining optimum laser power for recording. Each pair of the test zones 202b and 203b and the test zones 202c and 203c are positioned so as not to overlap with each other within the same recording surface of the multilayer recording medium 201.

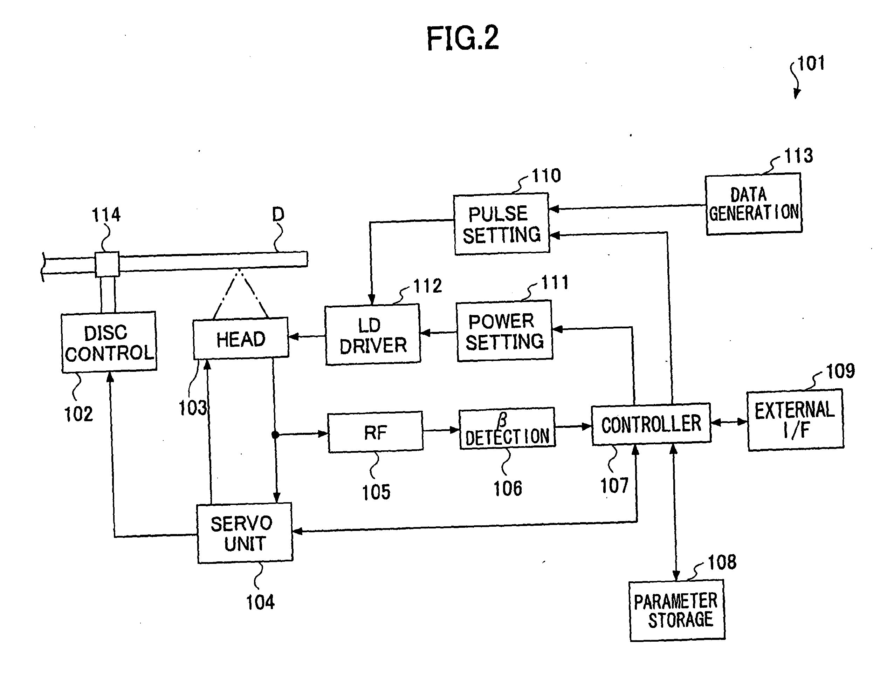

FIG. 2 shows a configuration of a recording apparatus 101 which controls the optimum recording power of a laser and records information on the multilayer recording medium 201.

A recording medium D such as the multilayer recording medium 201 is rotated by a rotary motor 114 which is a drive source. The rotary motor 114 is controlled by a disc rotation control unit 102 and rotates at a specified speed.

A head 103, with focusing and tracking servos provided by a servo unit 104, focuses a laser beam and forms recording marks on a recording film of the recording medium D. Also, the head 103 is movable along the radius of the recording medium D and can access the test zones and data zones provided in the recording medium D.

The head 103 is equipped with a light source (not shown). For the light source, a laser diode (LD) is normally used. The laser is modulated by an input pulse signal from an LD driver. 112 to achieve a specified recording power level. By modulating the laser between a recording power level and a space power level, recording marks and spots without recording marks are formed on the recording film. This results in differences in reflectivity and enables the reproduction of information signals.

When the recording medium D is a write-once medium such as a DVD-R or a DVD+R using organic dye, recording marks are called pits and other spots are called space.

A power setting unit 111 drives the LD driver 112 according to recording power instructions input from a controller 107 for centralized control of the recording apparatus 101, and makes the laser emit light at the specified power. During the OPC, the power setting unit 111 goes into a test-writing mode and sequentially changes the recording power.

Data to be recorded on the recording medium D are encoded or modulated by a data generating unit 113 into a specified format and output in a serial format as a data string.

The pulse width may be fixed at a certain value. However, it is preferable to set the pulse width by using the controller 107 according to linear velocity and disc types. By doing so, it is possible to compensate for the differences in sensitivity among recording mark lengths caused by the differences in linear velocity and disc types.

The type of a recording medium D is detected by decoding playback signals generated when a certain portion of the disc is played back by the head 103. If identifying makers of recording media D is possible in some way, those makers may be used as types of recording media D. Also, it is more preferable to divide each maker type into sub-types. For the identification of types, for example, various parameters pre-embedded in recording media D may also be used. For example, if recommended power and pulse width are embedded, those parameters may be used for identification.

Also, a unique maker identification code (vendor code) for each maker may be embedded. Further, codes for sub-types may also be embedded. Those codes enable optimum pulse width setting (write strategy) depending on various recording films of each maker.

Next, test writing, or the optimum power control (OPC) is described.

In the test writing, information is recorded at a fixed linear velocity and by sequentially changing the recording power, the recorded portion is played back to evaluate the recording quality, and the recording power which produces optimum recording quality is determined.

The recording apparatus 101 shown in FIG. 2 can sequentially change the recording power through the power setting unit 111 according to instructions from the controller 107 while recording information. If the recording medium D is a multilayer recording medium 201, test writing is performed on the test zones 202b, 202c, 203b, 203c shown in FIG. 1.

After test writing on one of the test zones, playback signals (RF signals) are obtained by playing back the recorded portion with the head 103. Optimum recording quality is determined by evaluating certain parameters of the RF signals. For example, a β-value detecting unit 106 measures a parameter β.

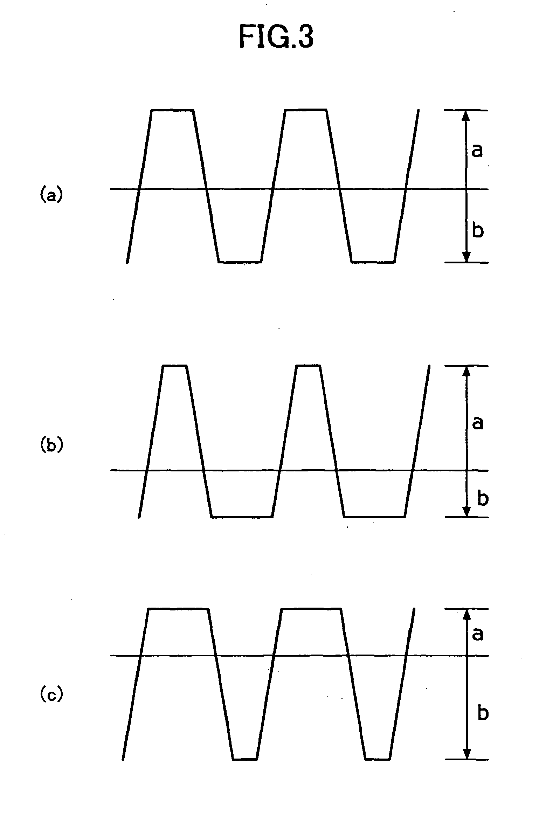

The β-value detecting unit 106 removes (with AC coupling) low-frequency components of the RF signals and detects upper envelope level a and lower envelope level b. This process is described with reference to FIG. 3. Assume that, as the characteristics of a recording film, the reflectivity of recording marks is low, and the level of RF signals is low in spots with low reflectivity. When the recording quality is normal, the upper and lower sides of AC-coupled RF signals are symmetric (a = b) as shown in FIG. 3 (a). When the recording power is too high, recording marks become long, and the upper side level of AC-coupled RF signals becomes higher than the lower side level (a > b) as shown in FIG. 3 (b). When the recording power is too low, recording marks become short, and the lower side level of AC-coupled RF signals becomes higher than the upper side level (a < b) as shown in FIG. 3 (c).

β is obtained by normalizing the difference between a and b by the RF amplitude (a + b). In other words,

$$\beta = (a-b)/(a+b)$$

A large β value indicates that the power is too high; a small β value indicates that the power is too low. The optimum power is indicated by a certain β value (for example, around 4%). This β value is called a β target. In the OPC, information is recorded by sequentially changing recording power, β values for the recorded portion are evaluated, and the recording power at the β target is obtained.

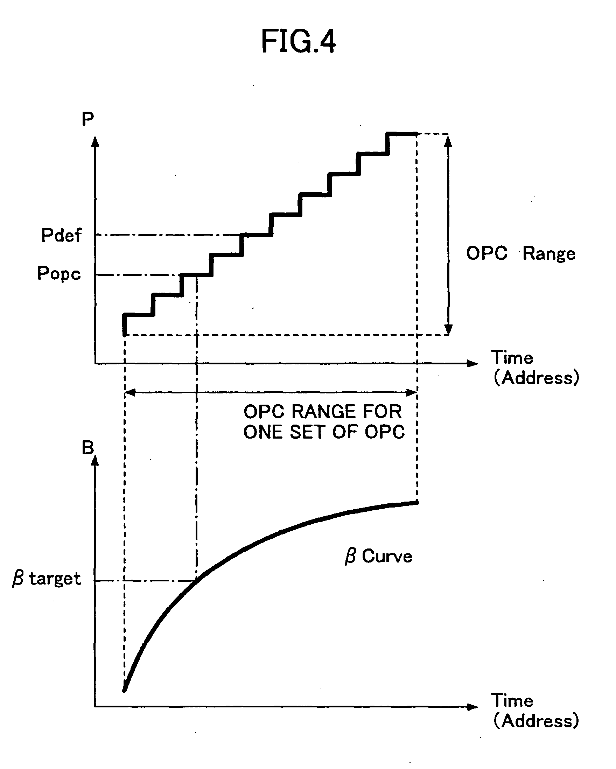

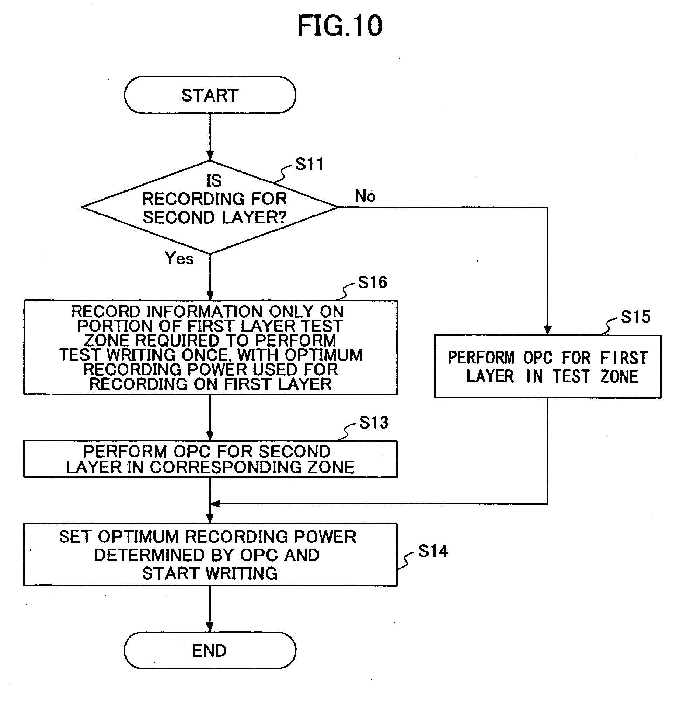

FIG. 4 shows the relationship between the power and β values. In FIG. 4, 10 levels of recording power are used for recording. The range of recording power levels is called the OPC range and the central power level is called Pdef and used as the standard level. The OPC range may be +40% and -30% from Pdef and divided into 10 levels. The OPC range may also be +5 mW and -4 mW from Pdef where the power level is incremented/decremented by 1 mW.

The β curve is drawn using the obtained 10 β values which curve forms a (two-dimensional) approximation and the power Popc which corresponds to the β target is obtained. Popt may fluctuate depending on the conditions such as temperature change when the OPC is performed. Therefore, in normal conditions, Popc should preferably be obtained at a point as close to Pdef as possible. Also, since Popc varies depending on recording media D, in many cases, Popc is set along with a write strategy corresponding to each type of the recording media D. For a memory unit 108, a non-volatile memory may be used. The memory unit 108 stores OPC power correction parameters for each recording apparatus 101.

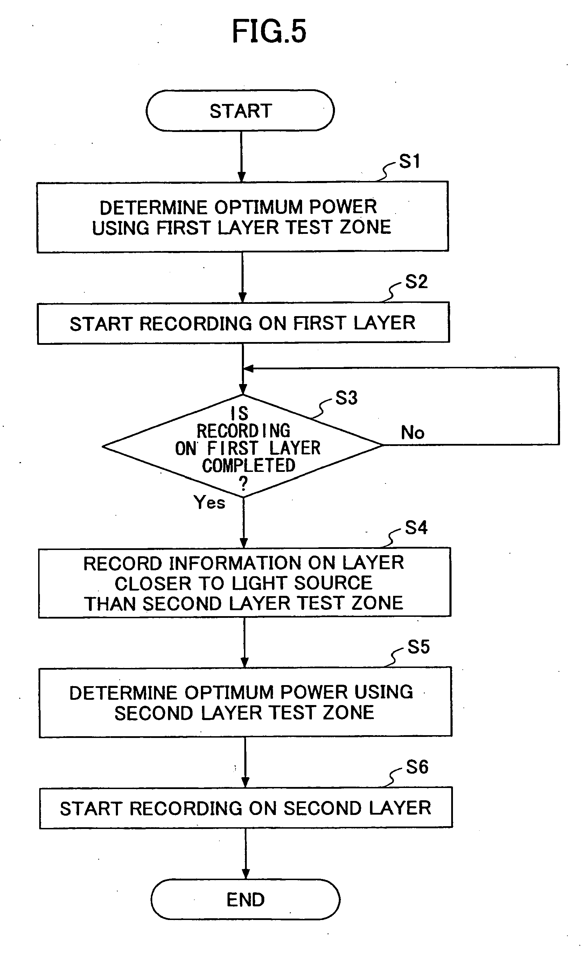

Next, an exemplary process of performing the OPC for the multilayer recording medium 201 is described with reference to a flowchart shown in FIG. 5.

For example, when information is recorded while rotating the multilayer recording medium 201 at a constant linear velocity (CLV), the relative velocity between the multilayer recording medium 201 and the laser beam for recording is always constant. Therefore, once optimum recording conditions such as recording power and recording pulse width are determined, those conditions can be used for the entire multilayer recording medium 201.

The OPC is performed in the inner and outer disc test zones 202b, 203b, 202c, and 203c by using various recording power levels. Then, information is recorded at a constant linear velocity on the entire recording medium by using the determined optimum recording power.

As shown in FIG. 5, when information is recorded on the first recording layer 202, the controller 107 performs, in the same way as recording information on a single-layer recording medium D, the OPC in the inner disc test zone 202b and determines the optimum recording power (step S1). Information is recorded on a data zone 202a in the first recording layer 202 by using the determined optimum recording power (step S2). When information recording on the first layer data zone 202a is completed (Yes in step S3), the optimum recording power for the second recording layer 203 should be determined before recording information on the second recording layer 203. In this case, the recording states of the second layer test zone 203b and the first layer data zone 203b which is situated closer to the laser source than the second layer data zone 203a on which information is actually going to be recorded are different.

In other words, the first layer test zone 202b and the second layer test zone 203b are positioned so as not to overlap within the same recording surface. The portion (202d in FIG. 1) of the first layer which is situated closer to the laser source than the second layer test zone 203b is in the erased state (high reflectivity and low transmittance). On the other hand, information has already been recorded on the data zone 202a of the first layer which is situated closer to the laser source than the second layer data zone 203a on which information is going to be recorded. The first layer data zone 202a is in the recorded state (low reflectivity and high transmittance).

Therefore, the optimum recording power is not obtainable with the current state of the portion 202d. To obtain the optimum recording power, the state of the portion 202d should be changed so as to conform to the actual recording state. To match the laser beam transmittance to the second layer test zone 203b with that to the second layer data zone 203a, information is recorded on the portion 202d of the first layer which is in the same recording surface area as that of the second layer test zone 203b and is closer to the laser source than the test zone 203b (preprocessing unit) (step S4).

After step S4, the optimum recording power is determined by performing the OPC in the second layer test zone 203b (test writing unit) (step S5), and then data are recorded on the second layer data zone 203a (step S6).

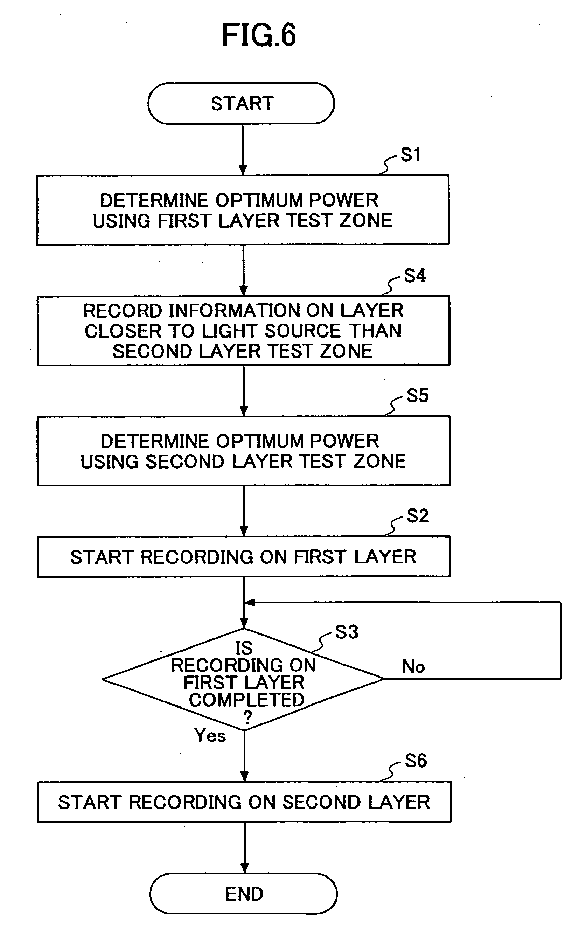

FIG. 6 is a flowchart illustrating another exemplary process. In this process, the controller 107 determines the optimum recording power for each of the first and second layers by performing the OPC in the first and second layer test zones 202b and 203b before recording data on the first layer data zone 202a (steps S1, S4, and S5). After these steps, the controller 107 records data on the first and second layer data zones 202a and 203a in sequence (steps S2, S3, and S6).

Either one of the processes shown in FIG. 5 and FIG. 6 may be used for recording. However, since the laser characteristics change due to the temperature change at the end of recording on the first layer data zone 202a, the process in FIG. 5, in which the recording power for the second layer is determined after recording on the first layer is completed and just before starting recording on the second layer, is more preferable to determine the optimum power.

As shown in FIG. 1, also in the outer disc area of the multilayer recording medium 201, first and second layer test zones 202c and 203c are positioned so as not to overlap in the same recording surface area. Therefore, the above description is applicable when performing the OPC in the outer disc test zones 202c and 203c. In step S4 for this case, information is recorded on a portion 202e of the first layer which is in the same recording surface area as that of the test zone 203c.

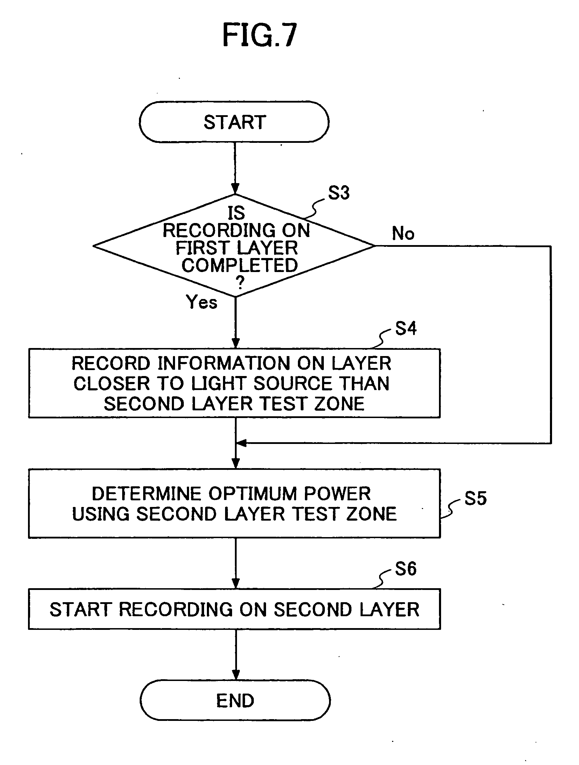

In still another case, information may be recorded on the second recording layer 203 regardless of whether recording information on the first recording layer 202 is completed or not. The process in such a case is described with reference to a flowchart shown in FIG. 7. In this process, if recording information on the first layer data zone 202a has already been completed (Yes in step S3), the controller 107 performs test writing on the second layer test zone 203b after recording information on the portion 202d of the first layer (steps S4 through S6). If information is not recorded on the first layer data zone 202a (No in step S3), the controller 107 performs test writing on the second layer test zone 203b without recording information on the portion 202d of the first layer (steps S5 and S6).

## 2. Second Embodiment

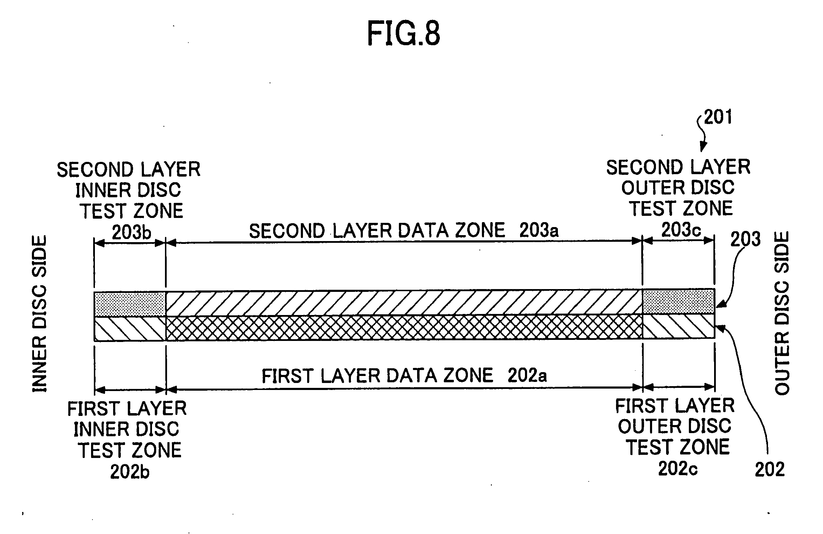

Another embodiment of the present invention is described below. FIG. 8 is a drawing illustrating a configuration of a multilayer recording medium 201 used in this embodiment. In FIG. 8, a detailed description of reference letters corresponding to those for the multilayer recording medium 201 shown in FIG. 1 is omitted. The multilayer recording medium 201 shown in FIG. 8 differs from that shown in FIG. 1 in that test zones 202b and 203b and test zones 202c and 203c are positioned in the same recording surface area of the multilayer recording medium 201. Therefore, unlike the multilayer recording medium 201 shown in FIG. 1, a portion 202d of the first layer which is closer to the laser source than the second layer test zone 203b and a portion 202e of the first layer which is in the same recording surface area as that of the test zone 203c do not exist in the multilayer recording medium 201 shown in FIG. 8.

The hardware configuration of a recording apparatus 101 used to record information on the multilayer recording medium 201 is the same as that of the recording apparatus 101 shown in FIG. 2. In the description below, the same reference letters as in FIG. 2 are used and detailed description of those reference letters is omitted.

Next, a process performed by the recording apparatus 101 is described.

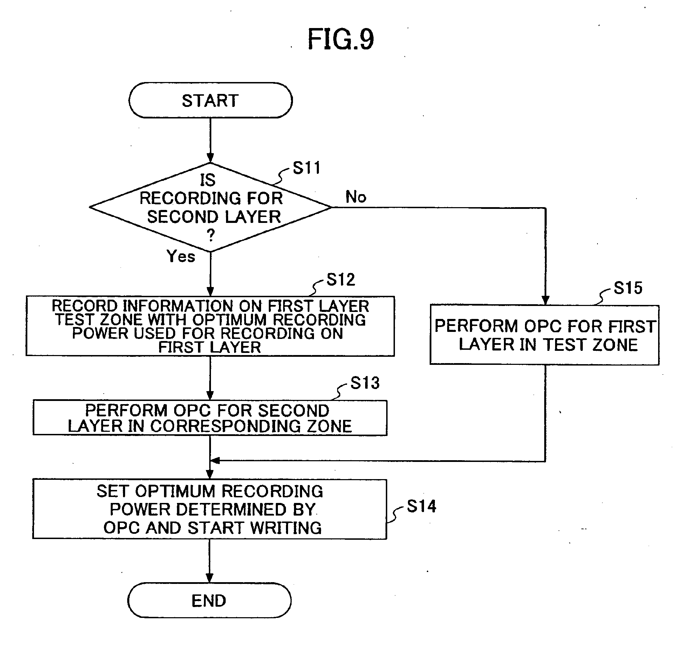

FIG. 9 is a flowchart of a process in which the recording apparatus 101 performs the OPC for the multilayer recording medium 201 and starts recording data.

First, the controller 107 determines whether the recording is for the second layer or the first layer based on the addresses in the write command (step S11) . If the recording is for the first layer, the controller 107 performs the OPC in the first layer test zone 202b or 202c, and determines the optimum recording power (step S15). Then, the controller 107 sets the determined optimum recording power and records (writes) information on the data zone 203a of the multilayer recording medium 201 (step S14).

If the recording is for the second layer (Yes in step S11), the controller 107 records information in advance, with the optimum recording power used for recording on the first layer, on the first layer test zone 202b or 202c which is in the same recording surface area as that of the second layer test zone 203b or 203c (step S12). After this recording is finished, the controller 107 performs the OPC in the second layer test zone 203b or 203c which is in the same recording surface area as that of the recorded test zone 202b or 202c, and determines the optimum recording power (step S13). The recording apparatus 101 sets the determined optimum recording power and records (writes) information on the second layer data zone 202a of the multilayer recording medium 201 (step S14).

With the process described above, the optimum recording power for recording on the second layer can be correctly obtained.

Next, another process performed by the recording apparatus 101 is described.

FIG. 10 is a flowchart of a process in which the recording apparatus 101 performs the OPC for the multilayer recording medium 201 and starts recording data. In FIG. 10, steps corresponding to the steps in FIG. 9 have the same reference letters and detailed description of those steps is omitted.

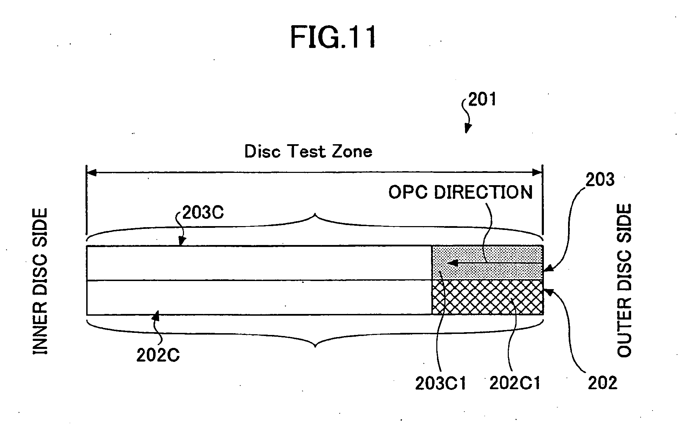

In the process as shown in FIG. 10, if the recording is for the second layer (Yes in step S11), the controller 107 records information before test writing on the second layer test zone, with the optimum recording power used for recording on the first layer, only on a portion of the first layer test zone 202b or 202c required to perform test writing once (step S16). Then, the controller 107 performs the OPC in the portion of the second layer test zone which is in the same recording surface area as that of the portion of the first layer test zone 202c which is used to perform the test writing once (step S13). In an example shown in FIG. 11, only a portion 202c1 of the first layer test zone 202c is used to perform the test writing once. After data are recorded on this portion, the OPC is performed only in a portion 203c1 of the second layer test zone 203c which is in the same recording surface area as that of the portion 202c1.

Next, still another process performed by the recording apparatus 101 is described.

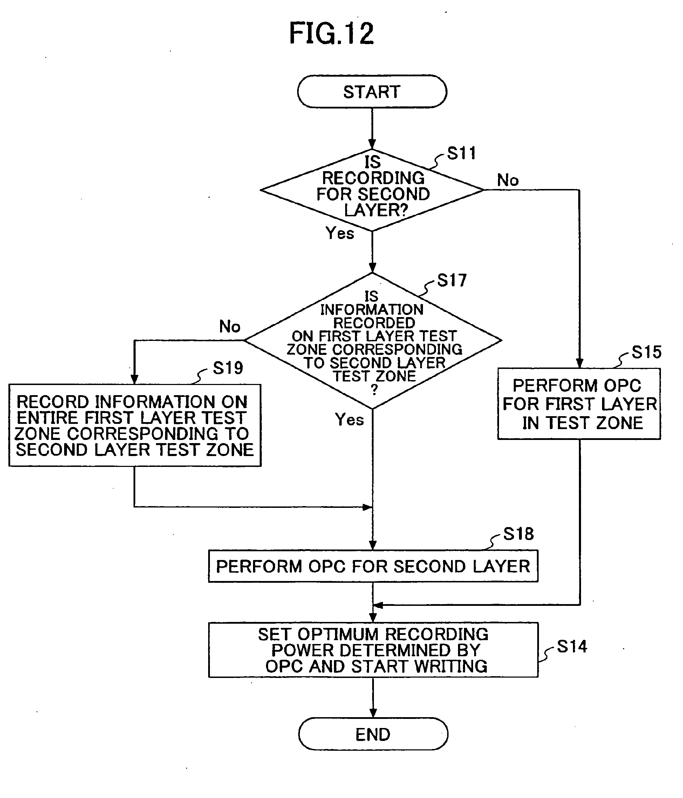

FIG. 12 is a flowchart of a process in which the recording apparatus 101 performs the OPC for the multilayer recording medium 201 and starts recording data. In FIG. 12, steps corresponding to the steps in FIG. 9 have the same reference letters and detailed description of those steps is omitted.

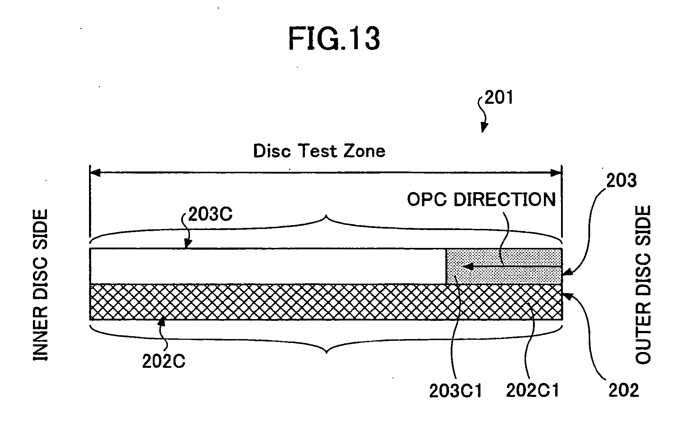

In the process as shown in FIG. 12, if the recording is for the second layer (Yes in step S11), the controller 107 determines whether information has been recorded on the first layer test zone 202b or 202c which is in the same recording surface area as that of the second layer test zone 203b or 203c (step S17). If information has been recorded (Yes in step S17), the OPC for the second layer is performed in the corresponding zone, and the optimum recording power is determined (step S18) . If information has not been recorded (No in step S17), the controller 107 records information in advance, with the optimum recording power used for recording on the first layer, on the entire first layer test zone 202b or 202c which is in the same recording surface area as that of the entire second layer test zone 203b or 203c (step S19). Then, after recording on the first layer test zone is completed, the controller 107 performs the OPC for the second layer in the second layer test zone which is in the same recording surface area as that of the first layer test zone on which information has been recorded, and determines the optimum recording power (step S18). In an example shown in FIG. 13, the controller 107 records information in advance, with the optimum recording power used for recording on the first layer, on the entire first layer test zone 202c which is in the same recording surface area as that of the entire second layer test zone 203c.

The process described above eliminates the need to record information on the first layer test zone 202b or 202c which is in the same recording surface area as that of the second layer test zone 203b or 203c each time when the OPC is performed in the second layer, thereby reducing the time for the OPC on the second layer.

Next, still another process performed by the recording apparatus 101 is described.

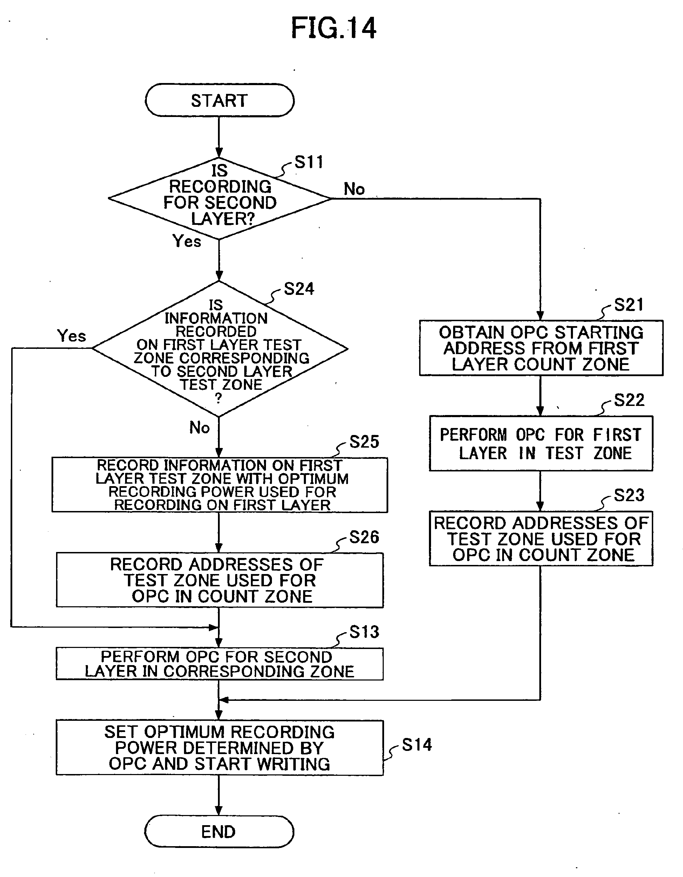

FIG. 14 is a flowchart of a process in which the recording apparatus 101 performs the OPC for the multilayer recording medium 201 and starts recording data. In FIG. 14, steps corresponding to the steps in FIG. 9 have the same reference letters and detailed description of those steps is omitted.

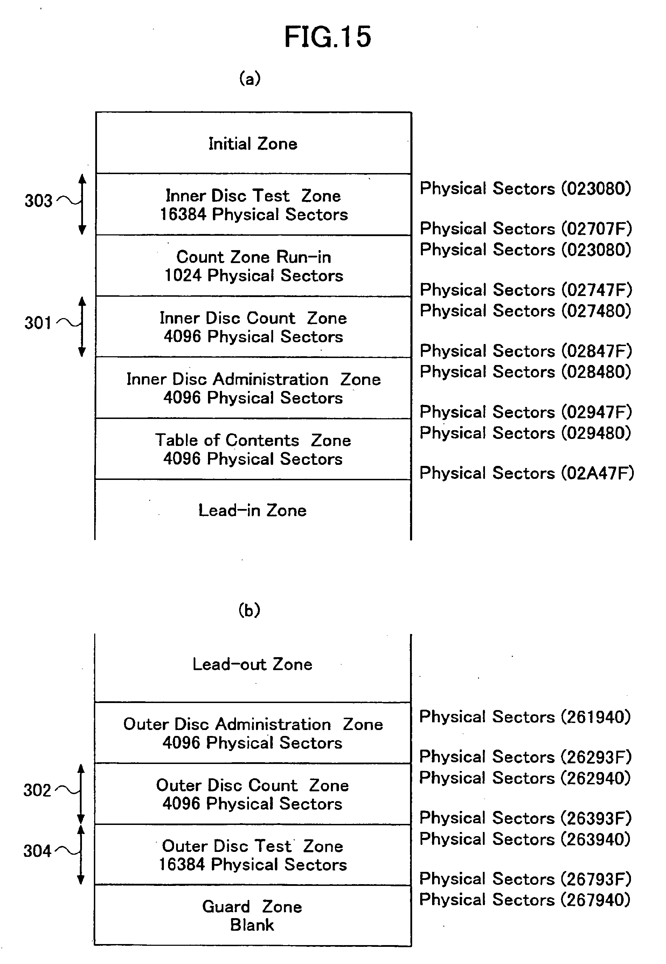

In this process, if the recording is for the first layer (No in step S11), test writing starting address is obtained from the count zone (disc count zone) (301 or 302 in FIG. 15) of the first layer (step S21). Then, the OPC is performed in the test zone 202b or 202c (303 or 304 in FIG. 15) which corresponds to the obtained addresses, and the optimum recording power is determined (step S22). After the OPC is performed, indicator information indicating the test zone used for the OPC is recorded in the count zone 301 or 302 (step S23).

If the recording is for the second layer (Yes in step S11), the controller 107 determines whether information has been recorded on the first layer test zone 203b or 203c which is in the same recording surface area as that of the second layer test zone 202b or 202c by referring to the count zone 301 or 302 (step S24). If information has been recorded (Yes in step S24), the controller 107 performs the OPC in the second layer test zone 203b or 203c, and determines the optimum recording power (step S13).

If information is not recorded (No in step S24), the controller 107 records information in advance, with the optimum recording power used for recording on the first layer, on the first layer test zone 203b or 203c (step S25). After information recording on the first layer is completed, the controller 107 records the indicator information indicating the test zone 203b or 203c on which information is recorded, in the count zone 301 or 302 (step S26). After the recording on the first layer, the controller 107 performs the OPC in the second layer test zone 202b or 202c which is in the same recording surface area as that of the first layer test zone 203b or 203c recorded in the count zone 301 or 302, and determines the optimum recording power (step S13).

With the process described above, it is possible to determine a first layer test zone on which information has already been recorded and to prevent performing test writing in the same first layer test zone.

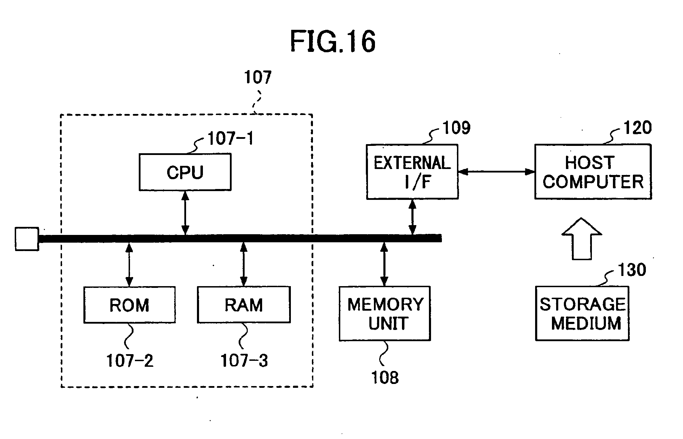

FIG. 16 is a block diagram illustrating a recording medium on which a program is recorded. The processes described above with reference to FIGs. 5, 6, 7, 9, 10, 12, and 14 may be performed by a CPU 107-1 of a microcomputer included in the controller 107 based on a program. The CPU 107-1 loads the programs stored in its storage medium ROM 107-2 or a memory unit 108 into a RAM 107-3 and executes the program.

The system may also be configured so that a host computer 120 connected through an external I/F 109 reads a program stored in its storage apparatus or a storage medium 130 and controls the recording apparatus 101 based on the program to perform processes shown in FIGs. 5, 6, 7, 9, 10, 12, and 14.

For the storage medium 130 for recording the programs, recording media such as a CD-ROM, flexible disc, and magnetic optical disc which record information optically, electrically, or magnetically; semiconductor memories such as a ROM and a flash memory which record information electrically; and other types of recording media may be used.

The present invention is not limited to the specifically disclosed embodiments, and variations and modifications may be made without departing from the scope of the present invention.

**Claims**

1. A recording method which determines an optimum recording power value by performing test writing on a test zone of a recording medium and records information on the recording medium (201) with the determined optimum recording power, wherein the recording medium (201) is a multilayer recording medium having a plurality of recording layers (202,203) within one recording surface; a test zone is formed on each recording layer; and the test zones in different recording layers (202,203) are positioned so as not to overlap in a same recording surface area;
**characterised in that**:

    when information is to be recorded on a target recording layer having a target test zone and positioned second or further from a light source and if information has already been recorded on an upper recording layer having an upper test zone and positioned closer to the light source than the target recording layer, information is recorded on a portion of the upper recording layer, which portion is positioned in the same recording surface area as that of the target test zone, before the test writing is performed on the target test zone in the target recording layer; and when information is to be recorded on the target recording layer and if information has not been recorded on the upper recording layer, the test writing is performed on the target test zone in the target recording layer without recording information on said portion of the upper recording layer.

2. A recording apparatus (101) which is adapted to determine an optimum recording power value by performing test writing on a test zone of a recording medium (201) and is adapted to record information on the recording medium (201) with the determined optimum recording power, wherein the recording medium (201) is a multilayer recording medium having a plurality of recording layers (202,203) within one recording surface, a test zone is formed on each recording layer (202,203), and the test zones in different recording layers are positioned so as not to overlap in a same recording surface area,
**characterised by** comprising:

    a preprocessing unit which, when recording information on a target recording layer having a target test zone and positioned second or further from a light source and information has already been recorded on an upper recording layer having an upper test zone and positioned closer to the light source than the target recording layer, is adapted to record information on a portion of the upper recording layer, which portion is positioned in the same recording surface area as that of the target test zone in the target layer;
    a test writing unit which, after the recording on the upper recording layer, is adapted to perform the test writing on the target test zone in the target recording layer;
    wherein the test writing unit, when recording information on the target recording layer and if information has not been recorded on the upper recording layer, is arranged to perform the test writing on the target test zone in the target recording layer without having the preprocessing unit record information on said portion of the upper recording layer.

3. A computer-readable storage medium having a program embodied therein for causing a recording apparatus to carry out the method of Claim 1.

**Patentansprüche**

1. Aufzeichnungsverfahren, das einen optimalen Aufzeichnungsleistungswert durch Ausführung eines Testschreibvorgangs auf einer Testzone eines Aufzeichnungsmediums bestimmt und Information auf dem Aufzeichnungsmedium (201) mit der bestimmten optimalen Aufzeichnungsleistung aufzeichnet, wobei das Aufzeichnungsmedium (201) ein mehrschichtiges Aufzeichnungsmedium ist, das eine Vielzahl von Aufzeichnungsschichten (202, 203) innerhalb einer Aufzeichnungsfläche hat; eine Testzone auf jeder Aufzeichnungsschicht ausgebildet ist; und die Testzonen in den verschiedenen Aufzeichnungsschichten (202, 203) entsprechend positioniert sind, um nicht in einem gleichen Aufzeichnungsflächenbereich einander zu überlappen;

**dadurch gekennzeichnet, dass**,

wenn Information auf einer Zielaufzeichnungsschicht aufgezeichnet werden soll, die eine Zieltestzone hat und die an zweiter Stelle oder weiter weg von einer Lichtquelle positioniert ist und falls Information bereits auf einer oberen Aufzeichnungsschicht aufgezeichnet worden ist, die eine obere Testzone hat und näher an der Lichtquelle als die Zielaufzeichnungsschicht positioniert ist, Information auf einem Abschnitt der oberen Aufzeichnungsschicht aufgezeichnet wird, wobei dieser Abschnitt in dem gleichen Aufzeichnungsflächenbereich wie der der Zieltestzone positioniert ist, bevor das Testschreiben auf der Zieltestzone in der Zielaufzeichnungsschicht ausgeführt wird; und wenn Information auf der Zielaufzeichnungsschicht aufgezeichnet werden soll und falls auf der oberen Aufzeichnungsschicht keine Information aufgezeichnet worden ist, das Testschreiben auf der Zieltestzone in der Zielaufzeichnungsschicht ausgeführt wird, ohne Information auf dem Abschnitt der oberen Aufzeichnungsschicht aufzuzeichnen.

2. Aufzeichnungsvorrichtung (101), die entsprechend angepasst ist, um einen optimalen Aufzeichnungsleistungswert durch Ausführung eines Testschreibens auf einer Testzone eines Aufzeichnungsmediums (201) zu bestimmen, und entsprechend angepasst ist, Information auf dem Aufzeichnungsmedium (201) mit der bestimmten optimalen Aufzeichnungsleistung aufzuzeichnen, wobei das Aufzeichnungsmedium (201) ein mehrschichtiges Aufzeichnungsmedium ist, das eine Vielzahl von Aufzeichnungsschichten (202, 203) innerhalb einer Aufzeichnungsfläche hat, eine Testzone auf jeder Aufzeichnungsschicht (202, 203) ausgebildet ist und die Testzonen in den verschiedenen Aufzeichnungsschichten entsprechend positioniert sind, um nicht in einem gleichen Aufzeichnungsflächenbereich einander zu überlappen;

**gekennzeichnet durch**

eine Vorverarbeitungseinheit, die, wenn Information auf einer Zielaufzeichnungsschicht aufgezeichnet wird, die eine Zieltestzone hat und die an zweiter Stelle oder weiter weg von einer Lichtquelle positioniert ist und Information bereits auf einer oberen Aufzeichnungsschicht aufgezeichnet worden ist, die eine obere Testzone hat und näher an der Lichtquelle als die Zielaufzeichnungsschicht positioniert ist, entsprechend angepasst ist, Information auf einem Abschnitt der oberen Aufzeichnungsschicht aufzuzeichnen, wobei dieser Abschnitt in dem gleichen Aufzeichnungsflächenbereich wie der der Zieltestzone in der Zielschicht positioniert ist;

eine Testschreibeinheit, die nach dem Aufzeichnen auf der oberen Aufzeichnungsschicht entsprechend angepasst ist, um das Testschreiben auf der Zieltestzone in der Zielaufzeichnungsschicht auszuführen;

wobei die Testschreibeinheit, wenn Information auf der Zielaufzeichnungsschicht aufgezeichnet wird und falls auf der oberen Aufzeichnungsschicht keine Information aufgezeichnet worden ist, entsprechend eingerichtet ist, das Testschreiben auf der Zieltestzone in der Zielaufzeichnungsschicht auszuführen, ohne die Vorverarbeitungseinheit Information auf dem Abschnitt der oberen Aufzeichnungsschicht aufzeichnen zu lassen.

3. Computerlesbares Speichermedium, in das ein Programm aufgenommen ist, das bewirkt, dass eine Aufzeichnungsvorrichtung das Verfahren nach Anspruch 1 ausführt.

**Revendications**

1. Procédé d'enregistrement qui détermine une valeur de puissance d'enregistrement optimale en effectuant une écriture de test sur une zone de test d'un support d'enregistrement et enregistre des informations sur le support d'enregistrement (201) avec la puissance d'enregistrement optimale déterminée, dans lequel le support d'enregistrement (201) est un support d'enregistrement multicouche comportant une pluralité de couches d'enregistrement (202, 203) dans une surface d'enregistrement ; une zone de test est formée sur chaque couche d'enregistrement ; et les zones de test dans les différentes couches d'enregistrement (202, 203) sont positionnées de manière à ne pas se chevaucher dans une même aire d'enregistrement ;

**caractérisé en ce que** :

lorsque des informations doivent être enregistrées sur une couche d'enregistrement cible comportant une zone de test cible et positionnée en seconde position ou plus loin d'une source de lumière et si des informations ont déjà été enregistrées sur une couche d'enregistrement supérieure comportant une zone de test supérieure et positionnée plus près de la source de lumière que la couche d'enregistrement cible, les informations sont enregistrées sur une partie de la couche d'enregistrement supérieure, laquelle partie est positionnée dans la même aire d'enregistrement que celle de la zone de test cible, avant que l'écriture de test ne soit effectuée sur la zone de test cible dans la couche d'enregistrement cible ; et, lorsque des informations doivent être enregistrées sur la couche d'enregistrement cible et si des informations n'ont pas été enregistrées sur la couche d'enregistrement supérieure, l'écriture de test est effectuée sur la zone de test cible dans la couche d'enregistrement cible sans enregistrer d'informations sur ladite partie de la couche d'enregistrement supérieure.

**2.** Dispositif d'enregistrement (101) qui est adapté pour déterminer une valeur de puissance d'enregistrement optimale en effectuant une écriture de test sur une zone de test d'un support d'enregistrement (201) et est adapté pour enregistrer des informations sur le support d'enregistrement (201) avec la puissance d'enregistrement optimale déterminée, dans lequel le support d'enregistrement (201) est un support d'enregistrement multicouche comportant une pluralité de couches d'enregistrement (202, 203) dans une surface d'enregistrement, une zone de test est formée sur chaque couche d'enregistrement (202, 203), et les zones de test dans les différentes couches d'enregistrement sont positionnées de manière à ne pas se chevaucher dans une même aire d'enregistrement, **caractérisé en ce qu'**il comprend :

une unité de prétraitement qui, lors de l'enregistrement d'informations sur une couche d'enregistrement cible comportant une zone de test cible et positionnée en seconde position ou plus loin d'une source de lumière et lorsque des informations ont déjà été enregistrées sur une couche d'enregistrement supérieure comportant une zone de test supérieure et positionnée plus près de la source de lumière que la couche d'enregistrement cible, est adaptée pour enregistrer des informations sur une partie de la couche d'enregistrement supérieure, laquelle partie est positionnée dans la même aire d'enregistrement que celle de la zone de test cible dans la couche cible ;
une unité d'écriture de test qui, après l'enregistrement sur la couche d'enregistrement supérieure, est adaptée pour effectuer l'écriture de test sur la zone de test cible dans la couche d'enregistrement cible ;
dans lequel l'unité d'écriture de test, lors de l'enregistrement d'informations sur la couche d'enregistrement cible et si des informations n'ont pas été enregistrées sur la couche d'enregistrement supérieure, est agencée pour effectuer l'écriture de test sur la zone de test cible dans la couche d'enregistrement cible sans que l'unité de prétraitement n'enregistre d'informations sur ladite partie de la couche d'enregistrement supérieure.

**3.** Support de mémorisation pouvant être lu par un ordinateur comportant un programme incorporé dans celui-ci pour amener un dispositif d'enregistrement à effectuer le procédé selon la revendication 1.

# FIG.1

SECOND LAYER
INNER DISC
TEST ZONE
203b

SECOND LAYER
DATA ZONE
203a

SECOND LAYER
OUTER DISC
TEST ZONE
203c

201

203

INNER DISC SIDE

OUTER DISC SIDE

202d

FIRST LAYER
INNER DISC
TEST ZONE
202b

FIRST LAYER DATA ZONE   202a

202e

FIRST LAYER
OUTER DISC
TEST ZONE
202c

202

EP 1 693 836 B1

# FIG.2

EP 1 693 836 B1

# FIG.3

(a)

(b)

(c)

# FIG.4

P

Pdef

Popc

OPC Range

Time
(Address)

OPC RANGE FOR
ONE SET OF OPC

B

β target

β Curve

Time
(Address)

# FIG.5

START

↓

DETERMINE OPTIMUM POWER
USING FIRST LAYER TEST ZONE ⌐S1

↓

START RECORDING ON FIRST LAYER ⌐S2

↓

IS
RECORDING
ON FIRST LAYER
COMPLETED
? ⌐S3 → No

Yes ↓

RECORD INFORMATION ON LAYER
CLOSER TO LIGHT SOURCE
THAN SECOND LAYER TEST ZONE ⌐S4

↓

DETERMINE OPTIMUM POWER USING
SECOND LAYER TEST ZONE ⌐S5

↓

START RECORDING ON SECOND LAYER ⌐S6

↓

END

# FIG.6

```
            ┌─────────────┐
            │    START    │
            └─────────────┘
                   │
                   ▼                          S1
  ┌────────────────────────────────────┐
  │    DETERMINE OPTIMUM POWER          │
  │    USING FIRST LAYER TEST ZONE      │
  └────────────────────────────────────┘
                   │
                   ▼                          S4
  ┌────────────────────────────────────┐
  │    RECORD INFORMATION ON LAYER      │
  │    CLOSER TO LIGHT SOURCE THAN      │
  │    SECOND LAYER TEST ZONE           │
  └────────────────────────────────────┘
                   │
                   ▼                          S5
  ┌────────────────────────────────────┐
  │    DETERMINE OPTIMUM POWER          │
  │    USING SECOND LAYER TEST ZONE     │
  └────────────────────────────────────┘
                   │
                   ▼                          S2
  ┌────────────────────────────────────┐
  │    START RECORDING ON FIRST LAYER   │
  └────────────────────────────────────┘
                   │
                   ▼                          S3
            ╱─────────────╲
           ╱      IS        ╲
          ╱  RECORDING ON    ╲     No
          ╲  FIRST LAYER      ╱────────────┐
           ╲  COMPLETED      ╱             │
            ╲      ?        ╱              │
             ╲─────────────╱               │
                   │ Yes                   │
                   ▼                       │
                                    S6     │
  ┌────────────────────────────────────┐
  │   START RECORDING ON SECOND LAYER   │
  └────────────────────────────────────┘
                   │
                   ▼
            ┌─────────────┐
            │     END     │
            └─────────────┘
```

# FIG.7

START

S3

IS RECORDING ON FIRST LAYER COMPLETED ?

No

Yes

S4

RECORD INFORMATION ON LAYER CLOSER TO LIGHT SOURCE THAN SECOND LAYER TEST ZONE

DETERMINE OPTIMUM POWER USING SECOND LAYER TEST ZONE

S5

START RECORDING ON SECOND LAYER

S6

END

# FIG.8

# FIG.9

START

S11
IS
RECORDING FOR
SECOND LAYER
?

No → S15
PERFORM OPC FOR FIRST
LAYER IN TEST ZONE

Yes

S12
RECORD INFORMATION ON FIRST LAYER
TEST ZONE WITH OPTIMUM RECORDING
POWER USED FOR RECORDING ON
FIRST LAYER

S13
PERFORM OPC FOR SECOND
LAYER IN CORRESPONDING ZONE

S14
SET OPTIMUM RECORDING
POWER DETERMINED BY
OPC AND START WRITING

END

# FIG.10

START

S11

IS
RECORDING FOR
SECOND LAYER?

No

Yes

S16

RECORD INFORMATION ONLY ON
PORTION OF FIRST LAYER TEST
ZONE REQUIRED TO PERFORM
TEST WRITING ONCE, WITH OPTIMUM
RECORDING POWER USED FOR
RECORDING ON FIRST LAYER

S15

PERFORM OPC FOR FIRST
LAYER IN TEST ZONE

S13

PERFORM OPC FOR SECOND
LAYER IN CORRESPONDING ZONE

SET OPTIMUM RECORDING POWER
DETERMINED BY OPC AND
START WRITING

S14

END

# FIG.11

201

Disc Test Zone

OPC DIRECTION

203

203C

202C

INNER DISC SIDE

OUTER DISC SIDE

203C1    202C1    202

EP 1 693 836 B1

# FIG.12

```
        ┌──────────────┐
        │    START     │
        └──────┬───────┘
               │
               ▼
          ◇ S11
     IS RECORDING
     FOR SECOND  ──No──┐
        LAYER?         │
          │Yes         │
          ▼            │
        ◇ S17          │
     IS INFORMATION    │
     RECORDED ON       │
     FIRST LAYER TEST  │
  ┌─No─ ZONE CORRE-    │
  │    SPONDING TO     │
  │    SECOND LAYER    │
  │    TEST ZONE?      │
  ▼                    ▼
┌────────────────┐  ┌──────────────┐
│ RECORD INFORM- │  │ PERFORM OPC  │
│ ATION ON       │  │ FOR FIRST    │
│ ENTIRE FIRST   │  │ LAYER IN     │
│ LAYER TEST     │  │ TEST ZONE    │
│ ZONE CORRE-    │  └──────┬───────┘
│ SPONDING TO    │   S15   │
│ SECOND LAYER   │         │
│ TEST ZONE S19  │         │
└───────┬────────┘         │
        │  │Yes            │
        └──┤               │
           ▼               │
┌──────────────────────┐   │
│ PERFORM OPC FOR      │   │
│ SECOND LAYER   S18   │   │
└──────────┬───────────┘   │
           │◄──────────────┘
           ▼
┌──────────────────────┐
│ SET OPTIMUM RECORDING│
│ POWER DETERMINED BY  │ S14
│ OPC AND START WRITING│
└──────────┬───────────┘
           ▼
     ┌──────────┐
     │   END    │
     └──────────┘
```

22

# FIG.13

201

Disc Test Zone

203

OPC DIRECTION

203C

INNER DISC SIDE

OUTER DISC SIDE

202C

203C1  202C1  202

# FIG.14

START

S11
IS RECORDING FOR SECOND LAYER? — No

Yes

S24
IS INFORMATION RECORDED ON FIRST LAYER TEST ZONE CORRESPONDING TO SECOND LAYER TEST ZONE ?

Yes

No

S21
OBTAIN OPC STARTING ADDRESS FROM FIRST LAYER COUNT ZONE

S22
PERFORM OPC FOR FIRST LAYER IN TEST ZONE

S23
RECORD ADDRESSES OF TEST ZONE USED FOR OPC IN COUNT ZONE

S25
RECORD INFORMATION ON FIRST LAYER TEST ZONE WITH OPTIMUM RECORDING POWER USED FOR RECORDING ON FIRST LAYER

S26
RECORD ADDRESSES OF TEST ZONE USED FOR OPC IN COUNT ZONE

S13
PERFORM OPC FOR SECOND LAYER IN CORRESPONDING ZONE

S14
SET OPTIMUM RECORDING POWER DETERMINED BY OPC AND START WRITING

END

24

# FIG.15

(a)

| | |
|---|---|
| **Initial Zone** | |
| **Inner Disc Test Zone**<br>16384 Physical Sectors | Physical Sectors (023080)<br><br>Physical Sectors (02707F) |
| **Count Zone Run-in**<br>1024 Physical Sectors | Physical Sectors (023080)<br><br>Physical Sectors (02747F) |
| **Inner Disc Count Zone**<br>4096 Physical Sectors | Physical Sectors (027480)<br><br>Physical Sectors (02847F) |
| **Inner Disc Administration Zone**<br>4096 Physical Sectors | Physical Sectors (028480)<br><br>Physical Sectors (02947F) |
| **Table of Contents Zone**<br>4096 Physical Sectors | Physical Sectors (029480)<br><br>Physical Sectors (02A47F) |
| **Lead-in Zone** | |

303

301

(b)

| | |
|---|---|
| **Lead-out Zone** | |
| **Outer Disc Administration Zone**<br>4096 Physical Sectors | Physical Sectors (261940)<br><br>Physical Sectors (26293F) |
| **Outer Disc Count Zone**<br>4096 Physical Sectors | Physical Sectors (262940)<br><br>Physical Sectors (26393F) |
| **Outer Disc Test Zone**<br>16384 Physical Sectors | Physical Sectors (263940)<br><br>Physical Sectors (26793F) |
| **Guard Zone**<br>Blank | Physical Sectors (267940) |

302

304

# FIG.16

107

107-1

CPU

EXTERNAL I/F
109

HOST COMPUTER
120

ROM
107-2

RAM
107-3

MEMORY UNIT
108

STORAGE MEDIUM
130

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003022532 A

- US 20030137915 A